**Europäisches Patentamt**

**European Patent Office**

**Office européen des brevets**

(19)

(11) Veröffentlichungsnummer: **0 191 367**
**B1**

(12) # EUROPÄISCHE PATENTSCHRIFT

(45) Veröffentlichungstag der Patentschrift:
**19.04.89**

(51) Int. Cl.⁴: **B 60 C 25/06**

(21) Anmeldenummer: **86101182.3**

(22) Anmeldetag: **30.01.86**

(54) Verfahren und Vorrichtung zur Montage von Fahrzeugluftreifen.

(30) Priorität: **13.02.85 DE 3504903**

(43) Veröffentlichungstag der Anmeldung:
**20.08.86 Patentblatt 86/34**

(45) Bekanntmachung des Hinweises auf die Patenterteilung:
**19.04.89 Patentblatt 89/16**

(84) Benannte Vertragsstaaten:
**AT BE CH DE FR GB IT LI LU NL SE**

(56) Entgegenhaltungen:
**EP-A-0 141 164**
**EP-A-0 154 715**

(73) Patentinhaber: **Continental Aktiengesellschaft, Königsworther Platz 1, D-3000 Hannover 1 (DE)**

(72) Erfinder: **Ewald, Hans, Andersenstrasse 7, D-3000 Hannover (DE)**

EP 0 191 367 B1

## Beschreibung

Die Erfindung betrifft ein Verfahren und eine Vorrichtung zur Montage von Fahrzeugluftreifen, deren Wülste mit zug- und druckfesten Wulstkernen sich im montierten Zustand am radial inneren Umfang der Felge neben sich im wesentlichen nach radial innen erstreckenden Feigenhörnern befinden.

Ein Fahrzeugrad, bei dem der Reifen in der angegebenen Weise an der Felge befestigt ist, wird z. B. in der DE-OS 3 000 428 beschrieben. Bei Fahrzeugrädern dieser Art, bei denen der Reifen im Gegensatz zu konventionellen Rädern seitlich um die Felge herumgeführt und mit den Wülsten am radial inneren Umfang angeordnet ist, läßt sich der Reifen nicht nach üblichen Verfahren und mit auf dem Markt befindlichen Vorrichtungen auf einteilige Felgen montieren.

Es ist in einer älteren Patentanmeldung (EP-A-0 141 164, veröffentlicht am 15.5.85) eine Montagevorrichtung vorgeschlagen worden, mit der ein Reifen bei einem Fahrzeugrad der obigen Art mit Hilfe einer angetriebenen Montagerolle montiert werden kann. Diese Vorrichtung ist recht kompliziert und aufwendig, da ein Motorantrieb für die Rolle vorgesehen werden muß und da eine mehrfache Umlenkung der Kraftübertragung erforderlich ist.

Der Erfindung liegt deshalb die Aufgabe zugrunde, ein Verfahren und eine Vorrichtung anzugeben, bei denen eine Reifenmontage bei Fahrzeugrädern der eingangs genannten Art mit einfacheren Mitteln erfolgen kann.

Diese Aufgabe wird erfindungsgemäß dadurch gelöst, daß zunächst ein Reifenwulstabschnitt über das Felgenhorn gehoben und in den Montageraum am radial inneren Umfang des Felgenkranzes eingeführt wird, daß danach ein nicht motorgetriebenes Montagemittel derart im Umfangsbereich des eingeführten Reifenwulstabschnittes mit dem Reifen in Eingriff gebracht wird, daß ein erster Abschnitt des Montagemittels axial außen vom Felgenhorn am Reifen anliegt, während ein zweiter Abschnitt auf Höhe des Felgenhorns und/oder axial innen vom Felgenhorn anliegt, wobei die beiden Abschnitte einen Winkel zwischen 80 und 120° miteinander einschließen, daß danach das Montagemittel unter Festhalten des eingeführten Wulstabschnittes an der Felge über den Reifenumfang herumgeführt wird und daß nach dem Wenden von Reifen und Felge der gegenüberliegende Reifenwulst entsprechend montiert wird. Eine erste Vorrichtung zur Durchführung der Reifenmontage ist dadurch gekennzeichnet, daß als Montagemittel eine nicht angetriebene Montagerolle dient, daß die Montagerolle im wesentlichen zwei Abschnitte aufweist, daß der Durchmesser zumindest eines Abschnitts in axialer Richtung der Rolle von außen nach innen hin abnimmt, daß die Mantelflächen der beiden Abschnitte unter einem Winkel zwischen 80 und 120° zueinander stehen, daß die Montagerolle derart an eine Felge mit einem in den Innenraum eingeführten Reifenwulstabschnitt heranführbar ist, daß der erste Abschnitt der Rolle axial außen vom Feigenhorn am Reifen anliegt, während der zweite Abschnitt auf der Höhe des Felgenhorns und/oder axial innen vom Felgenhorn anliegt. Eine zweite Vorrichtung zeichnet sich dadurch aus, daß als Montagemittel ein Montagewinkel mit zwei Schenkeln dient, daß die beiden Schenkel unter einen Winkel zwischen 80 und 120° zueinander stehen, daß der Montagewinkel derart an eine Felge mit einem in den Reifeninnenraum eingeführten Reifenwulstabschnitt heranführbar ist, daß der erste Schenkel axial außen vom Felgenhorn am Reifen anliegt, während der zweite Schenkel auf der Höhe des Felgenhorns und/oder axial innen vom Felgenhorn anliegt.

Unter "Herumführen des Montagemittels über den Reifenumfang" soll im Rahmen dieser Anmeldung verstanden werden, daß entweder bei ortsfester Positionierung von Reifen und Felge das Montagemittel in der Montagestellung am Reifenumfang entlanggeführt wird oder daß das Montagemittel ortsfest gehalten wird, während Reifen und Felge in Drehung versetzt werden.

Mit der Erfindung ergibt sich der entscheidende Vorteil, daß die vielen auf dem Markt vorhandenen Riefenmontagevorrichtungen für konventionelle Fahrzeugräder weiterverwendet werden können. Es ist bei ihnen lediglich eine bisher vorhandene Montagemuschel durch eine erfindungsgemäße Montagerolle oder einen erfindungsgemäßen Montagewinkel zu ersetzen, während der gesamte Motorantrieb und die Spannvorrichtung für Reifen und Felge identisch weiterverwendet werden können. Die erfindung zeichnet sich vor allem durch ihre Einfachheit aus, weil es bisher in Fachkreisen für zwingend erforderlich gehalten wurde, bei Fahrzeugrädern der in Frage stehenden Art zur Montage eine angetriebene Rolle zu verwenden, deren Umfangsgeschwindigkeit größer zu sein hatte als die Abrollgeschwindigkeit am Reifen. Mit diesen Maßnahmen wurde erreicht, daß der Reifen im Bereich des Reifenwulstes nach und nach von der Rolle in das Montagehochbett geschoben wurde. Bei der vorliegenden Erfindung wurde erkannt, daß es zur Montagemöglichkeit ausreicht, ein Montagemittel mit zwei Abschnitten einzusetzen, von dem der erste Abschnitt axial außen vom Felgenhorn angelegt wird, während der zweite Abschnitt radial innen vom Felgenhorn angreift und bei dem die beiden Abschnitte einen Winkel zwischen 80 und 120° miteinander bilden. Während des Drehens von Reifen und Felge werden mit einem solchen Montagemittel der Reifenwulst und die untere Reifenseitenwand in der Weise umgelenkt, daß der Reifenwulst in das Montagehochbett eintaucht. Um die Umlenkung möglichst reibungsarm durchführen zu können, wird gemäß einer bevorzugten Ausführungsform der Erfindung eine nicht angetriebene Montagerolle vorgeschlagen, die bevorzugt doppeltkegelig oder konkav ausgebildet ist. Es haben sich Rollen bewährt, bei denen der erste Abschnitt einen größten Durchmesser von ca. 100 mm, einen kleinsten von ca. 25 mm und eine axiale Erstreckung von ca. 35 mm aufweist und bei denen der zweite Abschnitt einen größten Durchmesser von ca. 45 mm und eine axiale Erstreckung von ca. 25 mm aufweist. Bei geeigneter Wahl des Neigungswinkels der Rollenachse kann der zweite Abschnitt der Rolle auch etwa zylinderförmig sein.

Gemäß einer weiteren bevorzugten Ausführungsform der Erfindung kann als Montagemittel anstelle der Rolle ein Montagewinkel zum Einsatz kommen, dessen Schenkel gegebenenfalls mit einem reibungsvermindernden Belag versehen sein können.

Schließlich bringt die Erfindung den Vorteil, daß die vorgeschlagenen Montagemittel nicht nur bei einer motorgetriebenen Montagevorrichtung zum Einsatz kommen können, sondern auch in Verbindung mit einem äußerst einfachen und billigen Montagewerkzeug angewendet werden können, indem sie lediglich an einer Montagestange befestigt werden und damit an Reifen und Felge herumgeführt werden.

Nachfolgend wird die Erfindung anhand einer Zeichnung näher erläutert. Es zeigt:

Fig. 1 eine Montagevorrichtung mit einer doppeltkegeligen Montagerolle in einer Seitenansicht,

Fig. 2 die Montagevorrichtung der Fig. 1 in einer Vorderansicht, Reifen und Felge geschnitten,

Fig. 3 einen Teil der Montagevorrichtung der Fig. 1 und 2 mit einem Spannelement und mit einem teilweise montierten Reifen,

Fig. 4 eine konkave Montagerolle mit einer Profilierung in einer Vorderansicht,

Fig. 5 eine Montagerolle mit einem kegeligen und einem zylinderförmigen Abschnitt in einer Vorderansicht,

Fig. 6 einen Montagewinkel in einer perspektivischen Ansicht,

Fig. 7 eine Montagestange in einer Vorderansicht, Reifen und Felge geschnitten.

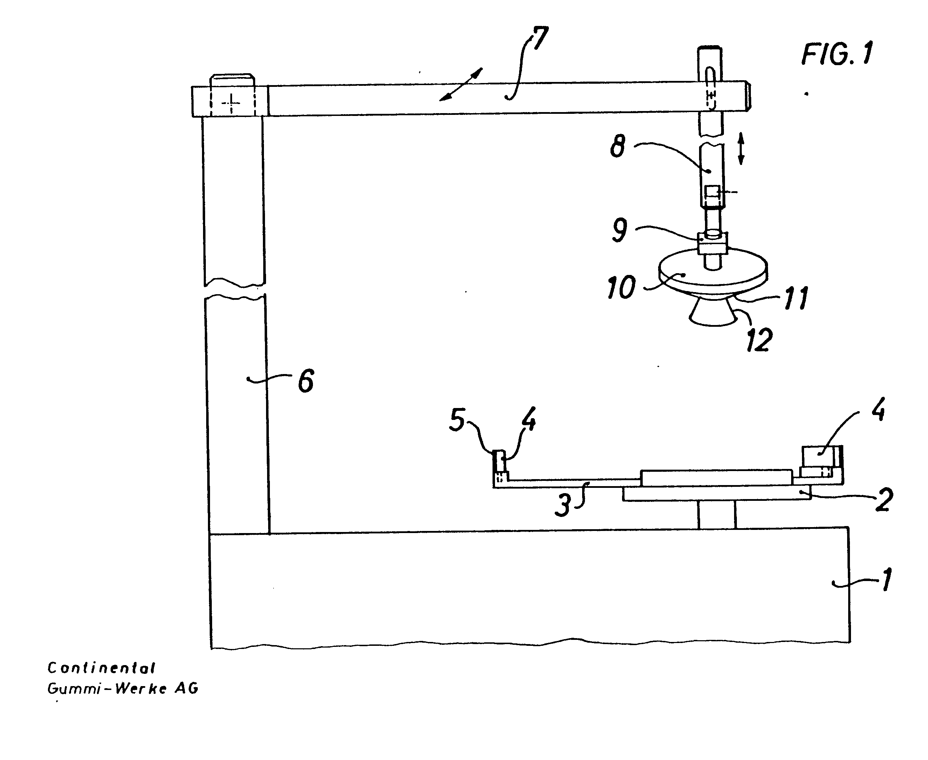

Die Montagevorrichtung der Fig. 1 weist ein Gehäuse 1 mit einem Motor auf, der einen Drehteller 2 antreibt und mit dem Spannarme 3 mit Spannbacken 4 betätigbar sind. Die Spannbacken 4 können mit Gummibelägen 5 versehen sein. An einer Säule 6 befindet sich ein drehbarer Schwenkarm 7, der an seinem vorderen Ende eine Halte stange 8 trägt. An der Haltestange 8 ist ein Rollenhalter 9 mit einer Montagerolle 10 befestigt. Zur Anpassung an verschiedene Radgrößen sollte die Montagerolle 10 höhenverstellbar sein, und es können weiterhin Mittel zur Einstellung des Neigungswinkels der Rolle 10 vorgesehen sein. Die Montagerolle 10 weist im wesentlichen zwei kegelige Abschnitte 11 und 12 auf, wobei die Durchmesser der Abschnitte 11 und 12 vom axial äußeren Rand der Rolle 10 nach innen hin abnehmen.

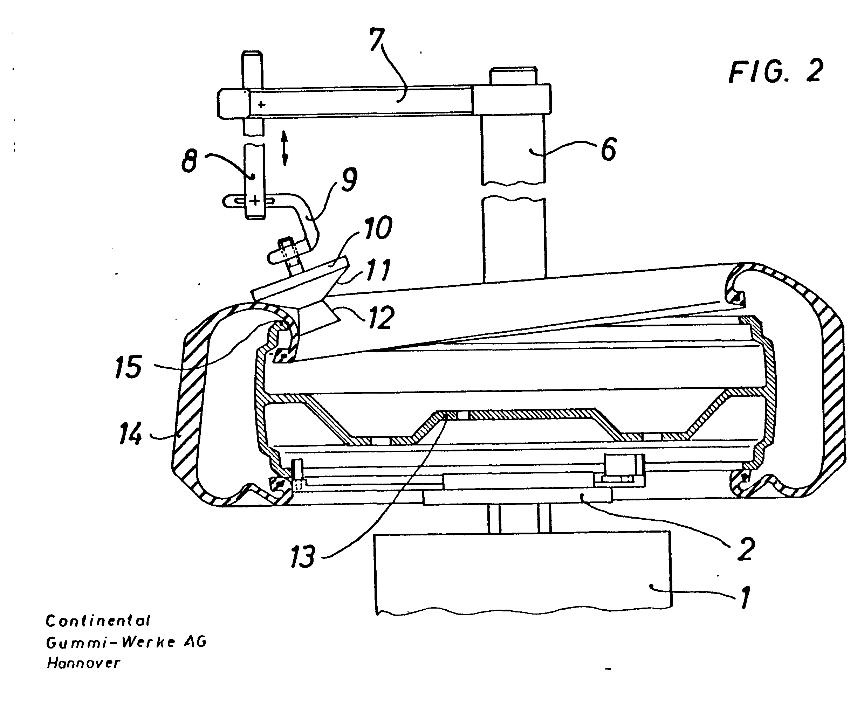

Fig. 2 zeigt die Vorrichtung der Fig. 1 mit einer aufgelegten Felge 13 und mit einem Reifen 14, und es ist die Stellung der Montagerolle 10 während der Reifenmontage dargestellt. Man erkennt, daß der erste Abschnitt 11 der Montagerolle 10 axial außen vom Felgenhorn 15 am Reifen anliegt, während der zweite Abschnitt 12 sich auf Höhe des Felgenhorns 15 befindet und zum Teil in den Raum axial innen vom Felgenhorn 15 hineinreicht. Die kegeligen Abschnitte 11, 12 der Montagerolle 10 schließen einen Winkel ein, der zwischen 80 und 120° liegen kann und der bevorzugt 95 bis 100° beträgt. Der Neigungswinkel der Montagerolle 10 ist derart zu wählen, daß der zweite Abschnitt 12 der Rolle 10 in dem Bereich, in dem er am Reifen 14 anliegt, nahezu senkrecht verläuft, wobei Winkelabweichungen nicht größer als 20° sein sollten. Das Heranführen der Rolle 10 an den Reifen geschieht mit Hilfe des Schwenkarms 7, nachdem vorher die Haltestange 8 und der Rollenhalter 9 passend eingestellt worden sind.

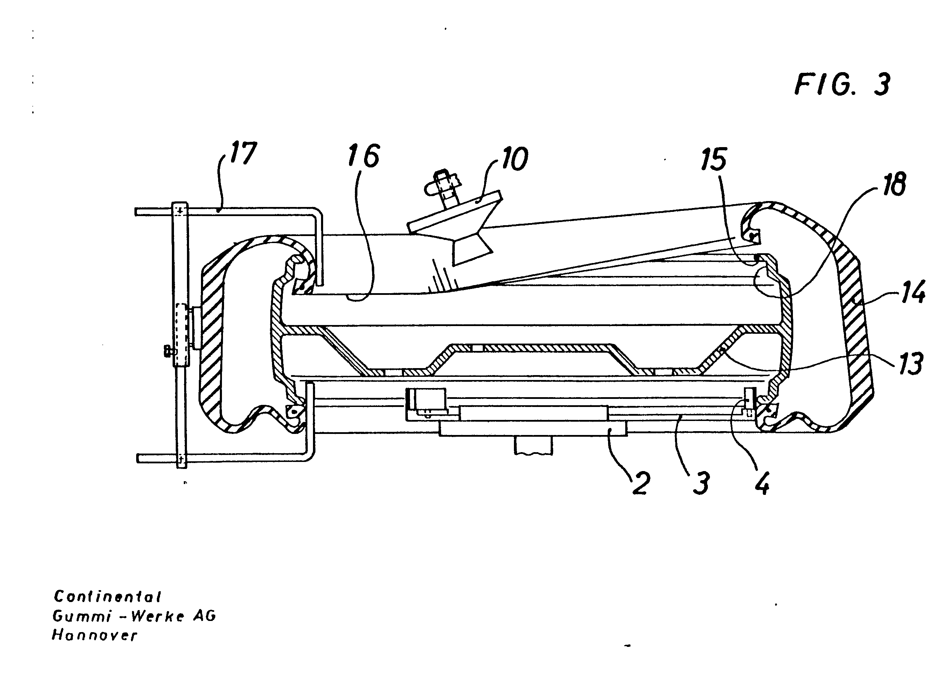

Fig. 3 zeigt die Rolle 10 in einer Stellung, in der der obere Reifenwulst bereits in einem ersten Abschnitt 16 montiert worden ist. Ein Spannelement 17 verhindert ein Zurückspringen des in den Montageraum eingeführten Reifenwulstabschnittes 16.

Nachfolgend wird das Montageverfahren ausführlich beschrieben. Zunächst werden der Reifen 14 und die Felge 13 in einer Stellung auf die Montagevorrichtung gelegt, in der sich die Reifenwülste seitlich außen von den Felgenhörnern 15 befinden. Die Felge 13 wird durch Ausfahren der Spannarme 3 mit Hilfe der Spannbacken 4 eingespannt.

Es wird ein erster Umfangsabschnitt 16 des oberen Reifenwulstes mit den Händen in den Montageraum hinter dem oberen Felgenhorn 15 eingeführt und zweckmäßigerweise mit Hilfe des Spannelementes 17 fixiert, so daß er bei der nachfolgenden Reifenmontage nicht zurückspringen kann. Danach wird die Montagerolle 10 in unmittelbarer Nachbarschaft des Spannelementes 17 an den Reifen 14 herangeführt, so daß sie die in Fig. 1 gezeichnete Stellung einnimmt, und der Schwenkarm 7 wird in dieser Stellung fixiert. Anschließend wird mit Hilfe eines üblichen Schalters der Drehteller 2 in Bewegung gesetzt, so daß sich Reifen 14 und Felge 13 zu drehen beginnen. Aufgrund der Eigenspannung des Reifens 14 wird der obere Reifenwulst mit der benachbarten Reifenseitenwand von der Rolle 10 umgelenkt, so daß er im Umfangsabschnitt zwischen Spannelement 17 und Rolle 10 über das Felgenhorn 15 gehoben wird und in den Montageraum eintaucht. Wenn die Felge 13 und der Reifen 14 etwa eine Umdrehung hinter sich haben, ist der obere Reifenwulst über seinen gesamten Umfang in den Raum hinter dem oberen Felgenhorn 15 eingetaucht.

Nach dem Lösen des Spannelementes 17 und dem Entfernen der Montagerolle 10 und dem Lösen der Spannbacken 4 werden Felge 13 und Reifen 14 gewendet, und es wird in der vorstehend beschriebenen Weise der zweite Reifenwulst montiert. Beim Aufpumpen des Reifens nehmen die Reifenwülste ihre endgültige Stellung auf den Sitzflächen 18 am radial inneren Umfang der Felge 13 ein.

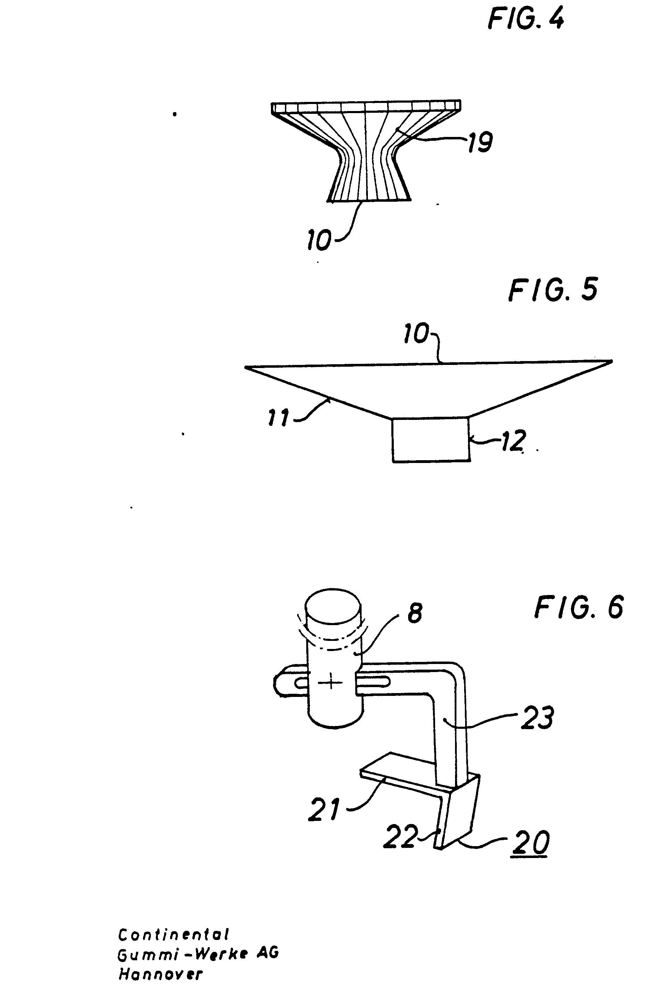

In Fig. 4 ist eine weitere mögliche Ausführungsform der Montagerolle 10 dargestellt, die sich durch eine konkave Gestaltung und eine profilierung 19 auf der Mantelfläche auszeichnet.

Fig. 5 zeigt eine Montagerolle 10, bei der der erste Abschnitt 11 kegelig und der zweite Abschnitt 12 zylinderförmig ausgebildet sind. Es kommt darauf an, daß die Mantelflächen der Abschnitte 11 und 12 wieder einen Winkel zwischen 80 und 120° einschließen.

Als weiteres Montagemittel kann ein in Fig. 6 perspektivisch dargestellter Montagewinkel 20 eingesetzt werden, der zwei Schenkel 21, 22 aufweist, die wiederum einen Winkel zwischen 80 und 120°, bevorzugt zwischen 95 bis 100° einschließen. Die Schenkel 21, 22 können mit einem reibungsvermindernden Belag, z. B. aus PTFE versehen sein. Der Montagewinkel 20 ist an einem Winkelhalter 23 befestigt, mit dem er in der Vorrichtung gemäß Fig. 1 bis 3 anstelle der Rolle 10 einsetzbar ist.

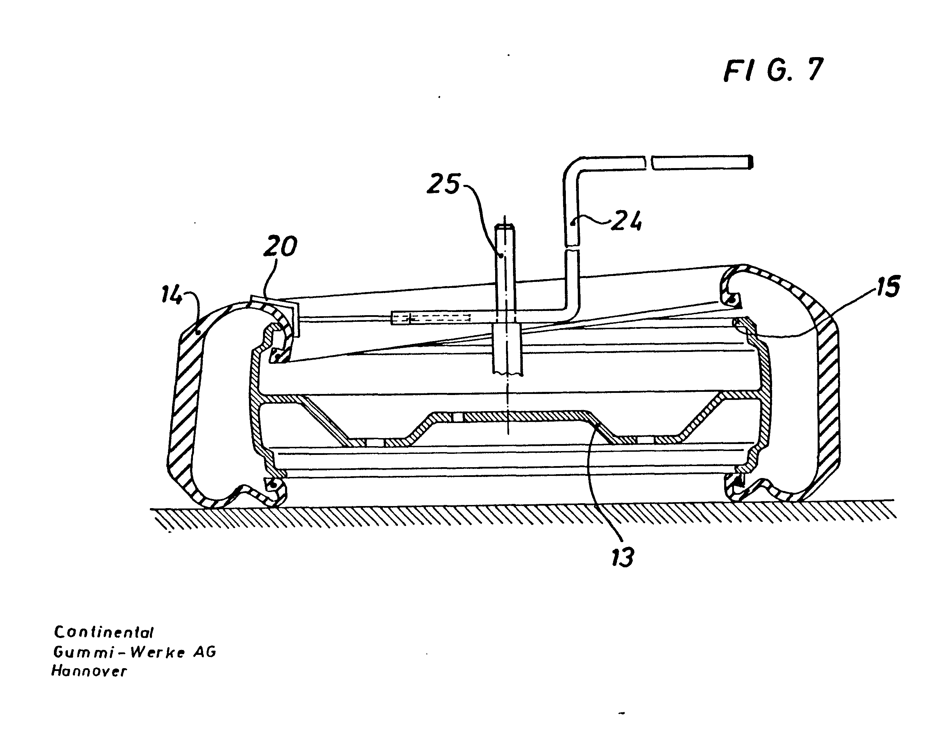

Fig. 7 zeigt ein besonders einfaches Montagegerät, das aus dem vorstehend beschriebenen Montagewinkel und einer Montagestange 24 besteht, die um eine Führungsstange 25 drehbar ist. Zur Reifenmontage wird die Führungsstange 25 in der Achse der Felge 13 angeordnet, es wird wieder ein erster Umfangsabschnitt des oberen Reifenwulstes in den Innenraum der Felge 13 eingeführt und dort fixiert. Nachdem der Montagewinkel 20 im Bereich dieses Abschnitts in Stellung gebracht ist, wird er mit Hilfe der Stange 24 einmal am Reifenumfang entlanggeführt. Die Montage des zweiten Reifenwulstes geschieht entsprechend. Es empfiehlt sich, vor Beginn der Montage die Felge 13 mit dem Reifen 14 an der Unterlage zu befestigen, z. B. mit Hilfe eines Feststellkonusses.

Selbstverständlich können anstelle des Montagewinkels 20 auch die vorstehend beschriebenen Montagerollen 10 an der Montagestange 24 befestigt sein.

**Patentansprüche**

1. Verfahren zur Montage von Fahrzeugluftreifen, deren Wülste mit zug- und druckfesten Wulstkernen sich im montierten Zustand am radial inneren Umfang der Felge neben sich im wesentlichen nach radial innen erstreckenden Felgenhörnern befinden, dadurch gekennzeichnet, daß zunächst ein Reifenwulstabschnitt über das Felgenhorn gehoben und in den Montageraum am radial inneren Umfang des Felgenkranzes eingeführt wird, daß danach ein nicht motorgetriebenes Montagemittel derart im Umfangsbereich des eingeführten Reifenwulstabschnittes mit dem Reifen in Eingriff gebracht wird, daß ein erster Abschnitt des Montagemittels axial außen vom Felgenhorn am Reifen anliegt, während ein zweiter Abschnitt auf Höhe des Felgenhorns und/oder axial innen vom Felgenhorn anliegt, wobei die beiden Abschnitte einen Winkel zwischen 80 und 120° miteinander einschließen, daß danach das Montagemittel unter Festhalten des eingeführten Wulstabschnittes an der Felge über den Reifenumfang herumgeführt wird und daß nach dem Wenden von Reifen und Felge der gegenüberliegende Reifenwulst entsprechend montiert wird.

2. Verfahren nach Anspruch 1, dadurch gekennzeichnet, daß als Montagemittel eine nicht angetriebene Montagerolle eingesetzt wird, die im wesentlichen aus zwei Abschnitten besteht, deren Durchmesser in axialer Richtung von außen nach innen abnehmen.

3. Verfahren nach Anspruch 1, dadurch gekennzeichnet, daß das Herumführen der Montagerolle am Reifenumfang durch eine Rotationsbewegung von Reifen und Felge geschieht.

4. Verfahren nach Anspruch 1, dadurch gekennzeichnet, daß als Montagemittel ein Montagewinkel eingesetzt wird.

5. Vorrichtung zur Durchführung des Verfahrens nach Anspruch 1, dadurch gekennzeichnet, daß als Montagemittel eine nicht angetriebene Montagerolle (10) dient, daß die Montagerolle (10) im wesentlichen zwei Abschnitte (11, 12) aufweist, daß der Durchmesser zumindest eines Abschnitts (11) in axialer Richtung der Rolle (10) von außen nach innen hin abnimmt, daß die Mantelflächen der beiden Abschnitte (11, 12) unter einem Winkel zwischen 80 und 120° zueinander stehen, daß die Montagerolle (10) derart an eine Felge (13) mit einem in den Innenraum eingeführten Reifenwulstabschnitt (16) heranführbar ist, daß der erste Abschnitt (11) der Rolle (10) axial außen vom Felgenhorn (15) am Reifen (14) anliegt, während der zweite Abschnitt (12) auf der Höhe des Felgenhorns (15) und/oder axial innen vom Felgenhorn (15) anliegt.

6. Vorrichtung nach Anspruch 5, dadurch gekennzeichnet, daß zum Herumführen der Montagerolle (10) am Reifenumfang entweder die Felge (13) mit dem Reifen (14) oder aber der Rollenhalter (9) antreibbar ist.

7. Vorrichtung nach Anspruch 5, gekennzeichnet durch eine doppeltkegelige oder konkave Montagerolle (10), bei der die Öffnungswinkel der kegeligen Abschnitte (11, 12) einen Winkel von 90 bis 100° einschließen.

8. Vorrichtung nach Anspruch 5 oder 7, dadurch gekennzeichnet, daß der erste Abschnitt (11) der Rolle (10) einen größten Durchmesser von ca. 100 mm, einen kleinsten von ca. 25 mm und eine axiale Erstreckung von ca. 35 mm aufweist.

9. Vorrichtung nach Anspruch 5, 7 oder 8, dadurch gekennzeichnet, daß der zweite Abschnitt (12) der Rolle (10) einen größten Durchmesser von ca. 45 mm, einen kleinsten von ca. 25 mm und eine axiale Erstreckung von ca. 25 mm aufweist.

10. Vorrichtung nach Anspruch 5, dadurch gekennzeichnet, daß der zweite Abschnitt (12) der Rolle (10) zylindrisch ausgebildet ist.

11. Vorrichtung nach Anspruch 5, dadurch gekennzeichnet, daß zum Herumführen der Rolle (10) am Reifenumfang die Rolle (10) an einer Montagestange (24) befestigt ist, die um eine in der Felgenachse befindliche Führungsstange (25) drehbar ist.

12. Vorrichtung zur Durchführung des Verfahrens nach Anspruch 1, dadurch gekennzeichnet, daß als Montagemittel ein Montagewinkel (20) mit zwei Schenkeln (21, 22) dient, daß die beiden Schenkel (21, 22) unter einen Winkel zwischen 80 und 120° zueinander stehen, daß der Montagewinkel (20) derart an eine Felge (13) mit einem in den Reifeninnenraum eingeführten Reifenwulstabschnitt (16) heranführbar ist, daß der erste Schenkel (21) axial außen vom Felgenhorn (15) am Reifen (14) anliegt, während der zweite Schenkel (22) auf der Höhe des Felgenhorns (15) und/oder axial innen vom Felgenhorn (15) anliegt.

## Claims

1. Method for mounting pneumatic vehicle tyres, the beads of which, having substantially inextensible and pressure-resistant bead cores, are, in their mounted position on the radially inner circumference of the rim, situated adjacent to rim flanges which extend substantially radially inwardly, characterised in that initially a tyre bead portion is lifted over the rim flange and introduced into the mounting area on the radially inner circumference of the rim ring, in that subsequently a non-motor-driven mounting means is brought into engagement with the tyre in the circumferential region of the introduced tyre bead portion in such a manner that a first portion of the mounting means abuts against the tyre axially externally of the rim flange, while a second portion abuts against the tyre on a level with the rim flange and/or axially internally of the rim flange, the two portions subtending an angle of between 80° and 120° with one another, in that thereafter the mounting means is looped over the tyre circumference and thereby retains the introduced bead portion securely in position on the rim, and in that the oppositely situated tyre bead is mounted accordingly after the tyre and rim have been turned over.

2. Method according to claim 1, characterised in that a non-driven mounting roller is used as the mounting means, which substantially comprises two portions, the diameters of said portions decreasing in size in the axial direction from externally inwardly.

3. Method according to claim 1, characterised in that the mounting roller is looped over the tyre circumference by means of a rotational movement of the tyre and rim.

4. Method according to claim 1, characterised in that a mounting angle member is used as the mounting means.

5. Device for carrying out the method according to claim 1, characterised in that a non-driven mounting roller (10) serves as the mounting means, in that the mounting roller (10) substantially comprises two portions (11, 12), in that the diameter of at least one portion (11) decreases in size from externally inwardly in the axial direction of the roller (10), in that the surfaces of the two portions (11, 12) lie at an angle of between 80° and 120° relative to one another, in that the mounting roller (10) can be brought towards a rim (13) with a tyre bead portion (16), which has been introduced into the interior, in such a manner that the first portion (11) of the roller (10) abuts against the tyre (14) axially externally of the rim flange (15), while the second portion (12) abuts against the tyre (14) on a level with the rim flange (15) and/or axially internally of the rim flange (15).

6. Device according to claim 5, characterised in that, to loop the mounting roller (10) over the tyre circumference, either the rim (13) is drivable with the tyre (14) or, however, the roller holder (9) is drivable.

7. Device according to claim 5, characterised by a biconical or concave mounting roller (10), wherein the angular apertures of the conical portions (11, 12) subtend an angle of 90° to 100°.

8. Device according to claim 5 or 7, characterised in that the first portion (11) of the roller (10) has a maximum diameter of approx. 100 mm, a minimum diameter of approx. 25 mm, and an axial extension of approx. 35 mm.

9. Device according to claim 5, 7 or 8, characterised in that the second portion (12) of the roller (10) has a maximum diameter of approx. 45 mm, a minimum diameter of approx. 25 mm, and an axial extension of approx. 25 mm.

10. Device according to claim 5, characterised in that the second portion (12) of the roller (10) has a cylindrical configuration.

11. Device according to claim 5, characterised in that, to loop the roller (10) over the tyre circumference, the roller (10) is secured to a mounting rod (24) which is rotatable about a guide rod (25) situated in the rim axis.

12. Device for carrying out the method according to claim 1, characterised in that a mounting angle member (20) having two arms (21, 22) serves as the mounting means, in that the two arms (21, 22) lie at an angle of between 80 and 120° relative to one another, in that the mounting angle member (20) can be brought towards a rim (13) with a tyre bead portion (16), which is introduced into the tyre interior, in such a manner that the first arm (21) abuts the tyre (14) axially externally of the rim flange (15), while the second arm (22) abuts against the tyre (14) on a level with the rim flange (15) and/or axially internally of the rim flange (15).

**Revendications**

1. Procédé pour le montage de pneumatiques de véhicules, dont les talons pourvus de tringles résistant à la traction et à la compression sont situés dans la condition de montage sur la périphérie radialement intérieure de la jante à côté de rebords de la jante s'étendant sensiblement radialement vers l'intérieur, caractérisé en ce qu'initialement une partie du talon du pneumatique est soulevée par dessus le rebord de jante et est introduite dans le volume de montage sur la périphérie radialement intérieure de la couronne de jante, en ce qu'ensuite un moyen de montage non entraîné par moteur est amené en prise avec le pneumatique dans une zone périphérique de la partie de talon qui à été engagée, en ce qu'une première partie du moyen de montage s'applique axialement à l'extérieur du rebord de jante contre le pneumatique tandis qu'une seconde partie s'applique à la hauteur du rebord de jante et/ou axialement à l'intérieur du rebord de jante, les deux parties faisant entre elles un angle compris entre 80° et 120°, en ce qu ensuite le moyen de montage est guidé autour de la jante sur le pourtour du pneumatique en immobilisant la partie de talon qui à été engagée et en ce que, après le retournement du pneumatique et de la jante, le talon opposé du pneumatique est monté en correspondance.

2. Procédé selon la revendication 1, caractérisé en ce qu'on utilise comme moyen de montage un rouleau de montage non entraîné, qui se compose dans l'essentiel de deux parties dont les diamètres diminuent de l'extérieur vers l'intérieur dans la direction axiale.

3. Procédé selon la revendication 1, caractérisé en ce que le guidage du rouleau de montage sur la périphérie du pneumatique est produit par un mouvement de rotation du pneumatique et de la jante.

4. Procédé selon la revendication 1, caractérisé en ce qu'on utilise comme moyen de montage une cornière de montage.

5. Dispositif pour la mise en oeuvre du procédé selon la revendication 1, caractérisé en ce que, comme moyen de montage, il est prévu un moyen de montage (10) non entraîné, en ce que le rouleau de montage (10) comporte dans l'essentiel deux parties (11, 12), en ce que le diamètre d'au moins une partie (11) diminue dans la direction axiale du rouleau (10) de l'extérieur vers l'intérieur en ce que les surfaces périphériques des deux parties (11, 12) font entre elles un angle compris entre 80° et 120°, en ce que le rouleau de montage (10) peut être engagé sur une jante (13) où une partie d'un talon du pneumatique (16) à été engagée dans le volume intérieur, en ce que la première partie (11) du rouleau (10) s'applique contre le pneumatique (14) axialement à l'extérieur du rebord de jante (15) tandis que la seconde partie (12) s'applique à la hauteur du rebord de jante (15) et/ou axialement à l'intérieur du rebord de jante (15).

6. Dispositif selon la revendication 5, caractérisé en ce que, pour le guidage du rouleau de montage (10) sur la périphérie du pneumatique, il est possible d'entraîner soit la jante (13) avec le pneumatique (14) soit cependant le support de rouleau (9).

7. Dispositif selon la revendication 5, caractérisé par un rouleau de montage (10) à double cône ou concave, dans lequel l'angle d'ouverture des parties coniques (11, 12) est compris entre 90 et 100°.

8. Dispositif selon les revendications 5 ou 7, caractérisé en ce que la première partie (11) du rouleau (10) à un diamètre maximal d'environ 100 mm, un diamètre minimal d'environ 25 mm et une dimension axiale d'environ 35 mm.

9. Dispositif selon une des revendications 5, 7 ou 8, caractérisé en ce que la seconde partie (12) du rouleau (10) a un diamètre maximal d'environ 45 mm, un diamètre minimal d'environ 25 mm et une dimension axiale d'environ 25 mm.

10. Dispositif selon la revendication 5, caractérisé en ce que la seconde partie (12) du rouleau (10) a un profil cylindrique.

11. Dispositif selon la revendication 5, caractérisé en ce que, pour guider le rouleau (10) sur la périphérie du pneumatique, ce rouleau (10) est fixé sur une barre de montage (24), qui peut tourner autour d'une barre de guidage (25) située sur l'axe de la jante.

12. Dispositif pour la mise en oeuvre du procédé selon la revendication 1, caractérisé en ce qu'il est prévu comme moyen de montage une cornière de montage (20) comportant deux ailes (21, 22), en ce que les deux ailes (21, 22) font entre elles un angle compris entre 80° et 120°, en ce que la cornière de montage (20) peut être engagée sur une jante (13) où une partie (16) du talon de pneumatique est introduite dans le volume intérieur du pneumatique, en ce que la première aile (21) s'applique contre le pneumatique (14) axialement à l'extérieur du rebord de jante (15) tandis que la seconde aile (22) s'applique à la hauteur du rebord de jante (15) et/ou axialement à l'intérieur par rapport au rebord de jante (15).

FIG.1

Continental
Gummi-Werke AG

FIG. 2

EP 0 191 367 B1

Continental
Gummi-Werke AG
Hannover

FIG. 3

Continental
Gummi – Werke AG
Hannover

## FIG. 4

## FIG. 5

## FIG. 6

Continental
Gummi-Werke AG
Hannover

FIG. 7

Continental
Gummi-Werke AG
Hannover